# EUROPEAN PATENT SPECIFICATION

(11) **EP 3 967 524 B1**
(45) Date of publication and mention of the grant of the patent: **06.08.2025**
(21) Application number: 19927751.8
(22) Date of filing: 25.11.2019
(51) Int. Cl.: B60C 19/12, B60C 5/00, B60C 9/02, B60C 15/00, B60C 15/04, B60C 15/06, B60C 19/00

(54) **PNEUMATIC TIRE**
LUFTREIFEN
PNEUMATIQUE

(30) Priority: 07.05.2019 JP 2019087675
(43) Date of publication of application: 16.03.2022
(73) Proprietor: BRIDGESTONE CORPORATION, Chuo-ku Tokyo 104-8340 (JP)
(72) Inventor: ISHIHARA, Taiga, Tokyo 104-8340 (JP); WATANABE, Jun, Tokyo 104-8340 (JP); YAMAGUCHI, Suguru, Tokyo 104-8340 (JP); KATO, Keiichi, Tokyo 104-8340 (JP); MUKAIGAWA, Tomonori, Tokyo 104-8340 (JP); GOZU, Makoto, Tokyo 104-8340 (JP); MITSUDA, Sho, Tokyo 104-8340 (JP)
(74) Representative: Marks & Clerk LLP
(86) International application number: PCT/JP2019/045969
(87) International publication number: WO 2020/225937

(56) References cited:
- EP-A1- 1 666 275
- EP-A1- 2 987 657
- EP-A2- 1 985 471
- JP-A- 2002 120 509
- JP-A- 2005 075 207
- JP-A- 2005 075 207
- JP-A- 2006 160 236
- JP-A- 2008 285 156

## Description

### TECHNICAL FIELD

The present invention relates to a pneumatic tire.

### BACKGROUND

To reduce resonance vibration (cavity resonance) of air or gas generated in an inner cavity of a tire, it has been a known practice to dispose a sound control body formed of a sponge material or the like on an inner surface of the tire (for example, PTL 1). The sound control body can convert a vibration energy of air or gas in the inner cavity of the tire to a thermal energy, reducing the cavity resonance in the inner cavity of the tire.

EP1666275A1 discloses a pneumatic tire and a producing method thereof capable of enhancing uniformity. A pneumatic tire comprises a carcass which uses a carcass ply in which a radially arranged carcass cord array is coated with topping rubber, and a tread. The carcass ply includes a center ply portion which is wound around the tread portion in a circumferential direction of the tire and whose beginning end and terminating end in the circumferential direction of the tire are jointed to each other, and long rectangular ply portions on opposite sides of the center ply portion. In each long rectangular ply portion, long rectangular pieces formed by cutting the topping rubber by slits, and each long rectangular ply portion is bent radially inward in accordance with shape of the sidewall portion in a manner that adjacent long rectangular pieces are superposed on each other, thereby forming a side portion of the carcass.

JP2005075207A discloses that, in the pneumatic tire forming a cavity space between an inner surface of the tire and a rim in the state that the tire has been mounted to a wheel, projections are added on the inside surface of the tire such that the cross sectional area of the cavity space varies circumferentially in the tire. The projection is provided with an adhesive portion adhering to the inside surface of the tire and a non-adhesive portion elongating from the adhesive portion along the inside surface of the tire.

JP2002120509A discloses a pneumatic tire with the tire inner surface being provided with protrusions extending within the tire cavity in the region of the bead portions. These projections allow for reduction of cavity noise.

### CITATION LIST

### Patent Literature

PTL 1: Japanese Patent Laid-Open No. 2005-254924

### SUMMARY

### (Technical Problem)

However, due to a tendency of a sound control body of a sponge material or the like to keep heat therein, an adhesion layer that bonds an inner surface of a tire with the sound control body would melt, causing separation of the sound control body from the inner surface of the tire, introducing a thermal failure of another tire member, or the like and, consequently, lowering tire durability.

Accordingly, an object of the present invention is to provide a pneumatic tire allowed to be improved in sound control performance without the necessity of lowering tire durability.

### (Solution to Problem)

According to a first aspect of the invention there is provided a pneumatic tire as specified in claim 1.

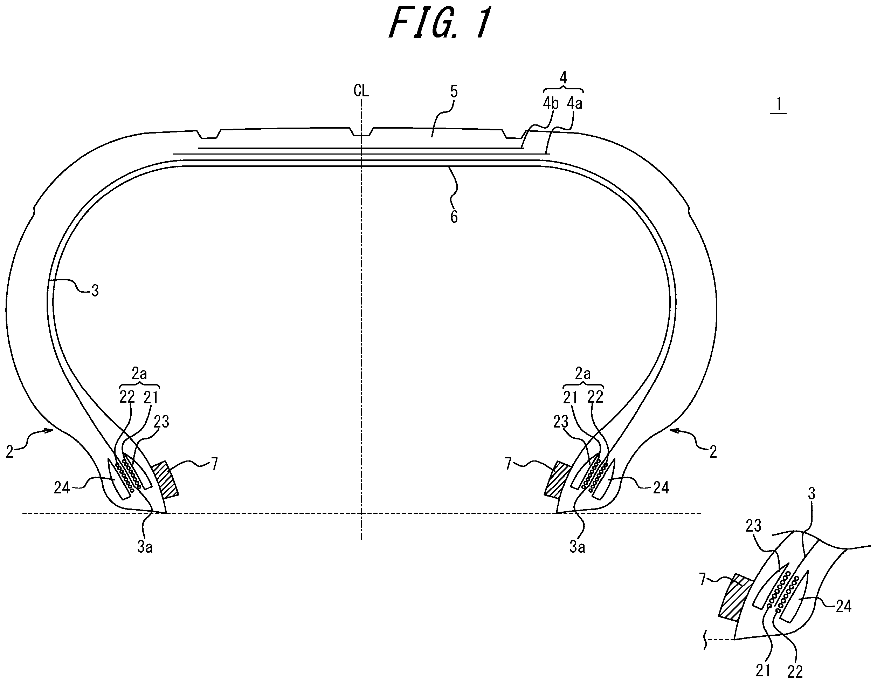

Here, the "bead portion" refers to a portion within a region in a tire radial direction in a state where the tire is mounted on an applicable rim while filled with a prescribed internal pressure with no load applied, the portion ranging from a rim baseline (a line passing through a distal end of a bead toe and that is parallel with a tire width direction as illustrated in an enlarged view of FIG. 1) to an outer end in the tire radial direction of one of a plurality of small bead cores, the outer end in the tire radial direction being on an outermost side in the tire radial direction.

Herein, the "applicable rim" refers to an approved rim for an applicable size (Measuring Rim according to STANDARDS MANUAL of ETRTO and Design Rim according to YEAR BOOK of TRA), which is listed or will be listed in the future in the industrial standards effective in an area where the tire is to be manufactured and used, i.e., JATMA YEAR BOOK of JATMA (the Japan Automobile Tyre Manufacturers Association) in Japan, STANDARDS MANUAL of ETRTO (The European Tyre and Rim Technical Organisation) in Europe, YEAR BOOK of TRA (The Tire and Rim Association, Inc.) in the USA, or the like (in other words, the above-described "rim" includes sizes that may be included in the above-described industrial standards in the future in addition to the current sizes and examples of the "sizes that will be listed in the future" may include sizes listed as "FUTURE DEVELOPMENTS" in ETRTO 2013). Meanwhile, for a size not listed in the above-described industrial standards, the "rim" refers to a rim having a width corresponding to a bead width of a tire.

The "prescribed internal pressure" refers to an air pressure (maximum air pressure) corresponding to a maximum load capability of a single wheel according to the applicable size and ply rating described in the above-described JATMA or the like. For a size not listed in the above-described industrial standards, the "prescribed internal pressure" refers to an air pressure (maximum air pressure) corresponding to a maximum load capability determined for each vehicle to which a tire is to be attached.

### (Advantageous Effect)

According to the present invention, it is possible to provide a pneumatic tire allowed to be improved in sound control performance without the necessity of lowering tire durability.

### BRIEF DESCRIPTION OF THE DRAWINGS

In the accompanying drawings:
FIG. 1 is a cross-sectional view in a tire width direction of a pneumatic tire according to an embodiment of the present invention.

### DETAILED DESCRIPTION

An embodiment of the present invention will be described in detail by way of example below with reference to the drawings.

FIG. 1 is a cross-sectional view in a tire width direction of a pneumatic tire (hereinafter, also referred to simply as "tire") according to an embodiment of the present invention. FIG. 1 illustrates a cross section in the tire width direction of the tire mounted on an applicable rim while filled with a prescribed internal pressure with no load applied. As illustrated in FIG. 1, the tire 1 includes a pair of bead portions 2 and a carcass 3. The tire 1 also includes a belt 4 including, in the illustrated embodiment, two belt layers 4a and 4b and a tread 5 in sequence on an outer side in a tire radial direction of a crown portion of the carcass 3.

As illustrated in FIG. 1, the tire 1 includes a pair of bead cores 2a embedded in the pair of bead portions 2. As illustrated in FIG. 1, the pair of bead cores 2a each include a pair of small bead cores 21 and 22 (a small bead core 21 on an inner side in the tire width direction and a small bead core 22 on an outer side in the tire width direction) divided in the tire width direction. In this example, a single bead wire wound is wound on each of the small bead cores 21 and 22. In the illustrated embodiment, the small bead cores 21 and 22 are each in the shape of a single straight line in a cross section; however, this example is non-limiting and a variety of cross-sectional shapes are acceptable. Further, for example, a metal such as steel is usable as a material of the bead core 2a, etc. In the illustrated embodiment, an inner stiffener 23 is disposed on an inner side in the tire width direction of the small bead core 21 and an outer stiffener 24 is disposed on an outer side in the tire width direction of the small bead core 22, thereby enhancing rigidity of each of the bead portions 2. The inner stiffener 23 and the outer stiffener 24 are formed of rubber in this embodiment.

In the embodiment illustrated in FIG. 1, the carcass 3 includes one carcass ply with a radial arrangement (carcass cords make an angle of 85 ° or more with respect to a tire circumferential direction, preferably an angle of 90 ° with respect to the tire circumferential direction). However, in the present invention, the number of carcass plies is not limited and may be two or more. In the present embodiment, the carcass 3 toroidally straddles between the pair of bead cores 2a with end portions thereof (in this example, ends 3a) each sandwiched between the pair of small bead cores 21 and 22 and engaged with the small bead cores 21 and 22. In the present disclosure, the carcass 3 may be in the form of a bias carcass.

In the embodiment illustrated in FIG. 1, the tire 1 includes the belt 4 including the two belt layers 4a and 4b. In this embodiment, the belt layers 4a and 4b are in the form of inclined belt layers, in which belt cords thereof are inclined with respect to the tire circumferential direction while intersecting each other between the layers with a tire equatorial plane CL in between. The number of the inclined belt layers is not limited. An inclination angle of the belt cords of the belt layers is not limited and may be, for example, in a range from 35 to 85° relative to the tire circumferential direction. Further, one or more reinforcing belt layers may be disposed on an outer side and/or an inner side in the tire radial direction of each of the inclined belt layers. Reinforcing cords of the reinforcing belt layer are not limited and may, for example, extend at an angle of 0 to 5° relative to the tire circumferential direction. Respective widths in the tire width direction of the belt layers and the reinforcing belt layers are not limited. Known materials may be used as materials of the belt cords and the reinforcing cords as appropriate and, likewise, the number of ends, etc. may be set as appropriate.

In the illustrated embodiment, the tire 1 includes the tread 5 in the form of a layer of a tread rubber. However, in the present invention, the tread rubber providing the tread 5 may include a plurality of different rubber layers. In this case, the plurality of different rubber layers may be stacked in the tire radial direction and/or arranged side by side in the tire width direction.

A sound control body 7 is disposed on an inner surface 6 of the tire 1 in each of the pair of bead portions 2 as illustrated in FIG. 1. In the present embodiment, the sound control body 7 is a porous body (in this example, a sponge material). Although the sound control body 7 is substantially in a rectangular shape in a cross section in the tire width direction in this embodiment, a shape of the sound control body 7 is not limited. In addition, a dimension, etc. of the sound control body 7 are not limited but it is preferable that a volume of the sound control body 7 be in a range from 0.1% to 80% of a total volume of an inner cavity of the tire 1. This is because a sound control performance can be enhanced as long as the volume of the sound control body 7 is 0.1% or more of the total volume of the inner cavity of the tire 1, whereas an increase in weight attributed to the sound control body 7 can be reduced as long as the volume of the sound control body 7 is 80% or less of the total volume of the inner cavity of the tire 1. The "volume of the sound control body" here refers to a volume in a state where the tire 1 is removed from the rim at a normal temperature and under a normal pressure. Further, the "total volume of the inner cavity of the tire" refers to a total volume determined when the tire 1 is mounted on the applicable rim while filled with a prescribed internal pressure.

The sound control body 7 continuously extends in the tire circumferential direction in this embodiment but may be discontinuously formed. Further, although the sound control body 7 is disposed only on the inner surface 6 of the tire 1 in each of the bead portions 2 in this example, the sound control body 7 may be partially located on the inner surface 6 of the tire 1 in a sidewall portion. In this case, it is preferable that the sound control body 7 be continuous from each of the bead portions 2 to the sidewall portion.

The material of the sound control body 7, which only has to be controllable to allow a cavity resonance energy to be reduced as a result of the cavity resonance energy being relaxed, absorbed, converted into another energy (for example, a thermal energy), or the like, is not limited to the above-described porous body and may be, for example, a non-woven fabric of an organic fiber or an inorganic fiber.

In a case where the sound control body 7 is a sponge material as in the present embodiment, the sponge material may be a spongy porous structure, which includes, for example, a so-called sponge having interconnected cells resulting from foaming a rubber or a synthetic resin. Further, the sponge material includes, in addition to the above-described sponge, a web produced by entangling and integrally connecting an animal fiber, a plant fiber, a synthetic fiber, or the like. It should be noted that the above-described "porous structure" is not limited to a structure having interconnected cells and also includes a structure having closed cells. The sponge material as described above has voids formed on a surface thereof and inside, which converts a vibration energy of vibrating air into a thermal energy. This reduces cavity resonance in the inner cavity of the tire and, consequently, a road noise can be reduced.

Examples of a material of the sponge material include synthetic resin sponges such as an ether-based polyurethane sponge, an ester-based polyurethane sponge, a polyethylene sponge and rubber sponges such as a chloroprene rubber sponge (CR sponge), an ethylene-propylene-diene rubber sponge (EPDM sponge), and a nitrile rubber sponge (NBR sponge). In view of noise reduction performance, weight reduction, foaming adjustability, durability, etc., it is preferable that, for example, a polyurethane-based sponge including an ether-based polyurethane sponge or a polyethylene-based sponge be used.

As in the present embodiment, in a case where the sound control body 7 is the sponge material, a hardness of the sponge material is preferably, but not limited to, in a range from 5 to 450 N. With the hardness being 5 N or more, the noise reduction performance can be improved. With the hardness being 450 N or less, adhesiveness of the sound control body can be increased. Likewise, the hardness of the sound control body is preferably in a range from 8 to 300 N. Here, the "hardness" is a value measured in accordance with, among measurement methods in JIS K6400, Item 6, a method A in Item 6.3.

Further, a specific gravity of the sponge material is preferably in a range from 0.001 to 0.090. This is because with the specific gravity of the sponge material being 0.001 or more, the noise reduction performance can be improved, while with the specific gravity of the sponge material being 0.090 or less, a weight increase attributed to the sponge material can be reduced. Likewise, the specific gravity of the sponge material is more preferably in a range from 0.003 to 0.080. Here, the "specific gravity" is a value obtained by converging an apparent density to a specific gravity in accordance with a measurement method in JIS K6400, Item 5.

Further, a tensile strength of the sponge material is preferably in a range from 20 to 500 kPa. This is because with the tensile strength being 20 kPa or more, the adhesiveness can be improved, while with the tensile strength being 500 kPa or less, productivity of the sponge material can be improved. Likewise, the tensile strength of the sponge material is more preferably in a range from 40 to 400 kPa. Here, the "tensile strength" is a value measured with a No. 1 dumbbell test piece in accordance with a measurement method in JIS K6400, Item 10.

Further, elongation at break of the sponge material is preferably in a range from 110% to 800%. This is because with the elongation at break being 110% or more, generation of a crack in the sponge material can be reduced, while with the elongation at break being 800% or less, the productivity of the sponge material can be improved. Likewise, the elongation at break of the sponge material is preferably in a range from 130% to 750%. Here, the "elongation at break" is a value measured with a No. 1 dumbbell test piece in accordance with a measurement method in JIS K6400, Item 10.

Further, a tear strength of the sponge material is preferably in a range from 1 to 130 N/cm. This is because with the tear strength being 1 N/cm or more, the generation of a crack in the sponge material can be reduced, while with the tear strength being 130 N/cm or less, productivity of the sponge material can be improved. Likewise, the tear strength of the sponge material is preferably in a range from 3 to 115 N/cm. Here, the "tear strength" is a value measured with a No. 1 test piece in accordance with JIS K6400, Item 11.

Further, a foaming rate of the sponge material is preferably in a range from 1% to 40%. This is because with the foaming rate being 1% or more, the noise reduction performance can be improved, while with the foaming rate being 40% or less, the productivity of the sponge material can be improved. Likewise, the foaming rate of the sponge material is preferably in a range from 2 to 25%. Here, the "foaming rate" is a value obtained by subtracting 1 from a ratio A/B of a specific gravity A of a solid phase portion of the sponge material to a specific gravity B of the sponge material and multiplying the resulting value by 100.

Further, a total mass of the sponge material is preferably in a range from 5 to 800 g. This is because with the mass being 5 g or more, the noise reduction performance can be improved, while with the mass being 800 g or less, a weight increase attributed to the sponge material can be reduced. Likewise, the mass of the sponge material is preferably in a range from 20 to 600 g.

Description will be made below on workings and effects of the pneumatic tire according to the present embodiment.

First, in the tire 1 of the present embodiment, the sound control body 7 is disposed on the inner surface 6 of the tire 1 in each of the bead portions 2, so that a sound control performance can be enhanced with resonance vibration (cavity resonance) reduced.

Here, in the present embodiment, each of the end portions (in this example, the ends 3a) of the carcass 3 is sandwiched between the pair of small bead cores 21 and 22. By virtue of this configuration, the end portions (in this example, the ends 3a) of the carcass 3 are fixed, which makes it possible to reduce heat buildup at the end portions (in this example, the ends 3a) of the carcass 3. Further, the bead cores 2a each include the pair of divided small bead cores 21 and 22, which reduces a volume of the bead core 2a that is one of sources of heat buildup. Thus, heat kept in the sound control body 7 can be reduced by virtue of a small amount of heat buildup at each of the bead portions 2, which allows for reducing separation of the sound control body 7 from the inner surface 6 of the tire 1, making a thermal failure of another tire member unlikely to be invited, or the like and, consequently, allows for preventing tire durability from being impaired.

Therefore, the pneumatic tire of the present embodiment is allowed to be improved in sound control performance without the necessity of lowering tire durability.

It is preferable that the tire of the present invention include a tread portion and a sealant layer be disposed on the inner surface of the tire in the tread portion. This is because if the pneumatic tire has a puncture, the puncture can be fixed by virtue of the sealant layer. In particular, in a case where the sound control body 7 is not disposed on the inner surface 6 of the tire 1 in the tread portion (but disposed only on the inner surface 6 of the tire 1 in each of the bead portions 2) as in the above-described embodiment, no sealant enters pores of the sound control body 7, such as a sponge material, etc., allowing a puncture repair function to be sufficiently exhibited.

In view of preventing the tire durability from being lowered, 100% in volume of the sound control body is present in the region in the tire radial direction where the pair of bead portions are located.

### REFERENCE SIGNS LIST

- 1: Tire (Pneumatic tire)
- 2: Bead portion
- 2a: Bead core
- 21, 22: Small bead core
- 23: Inner stiffener
- 24: Outer stiffener
- 3: Carcass
- 3a: Carcass edge
- 4: Belt
- 4a, 4b: Belt layer
- 5: Tread
- 6: Inner surface of tire
- 7: Sound control body

## Claims

1. A pneumatic tire (1) comprising:
a pair of bead cores (2a) embedded in a pair of bead portions (2), the pair of bead cores each comprising a pair of small bead cores (21, 22) divided in a tire width direction; and
a carcass (3) comprising one or more carcass plies, the carcass toroidally straddling between the pair of bead cores with end portions of the carcass each sandwiched between the pair of small bead cores and engaged with the small bead cores,
**characterised in that**
a sound control body (7) is disposed on an inner surface of the tire in the pair of bead portions, and
wherein 100% in volume of the sound control body is disposed in a region in a tire radial direction where the pair of bead portions are located, wherein a bead portion refers to a portion within a region in a tire radial direction in a state where the tire is mounted on an applicable rim while filled with a prescribed internal pressure with no load applied, the portion ranging from a rim baseline to an outer end in the tire radial direction of one of a plurality of small bead cores.

2. The pneumatic tire (1) according to claim 1, further comprising a tread portion (5), wherein
a sealant layer is disposed on the inner surface of the tire in the tread portion.

## Patentansprüche

1. Luftreifen (1), Folgendes umfassend:
ein Paar von Wulstkernen (2a), die in einem Paar von Wulstabschnitten (2) eingebettet sind, wobei das Paar von Wulstkernen jeweils ein Paar von kleinen Wulstkernen (21, 22) umfasst, die in einer Reifenbreitenrichtung geteilt sind; und
eine Karkasse (3), die eine oder mehrere Karkassenlagen umfasst, wobei die Karkasse ringförmig das Paar von Wulstkernen überspannt, wobei Endabschnitte der Karkasse jeweils zwischen dem Paar von kleinen Wulstkernen sandwichartig eingefügt sind und mit den kleinen Wulstkernen in Eingriff stehen,
**dadurch gekennzeichnet, dass**
ein Schalldämpfungskörper (7) auf einer Innenfläche des Reifens in dem Paar von Wulstabschnitten angeordnet ist, und
wobei 100 % des Volumens des Schalldämpfungskörpers in einem Bereich in einer Reifenradialrichtung angeordnet sind, in dem sich das Paar von Wulstabschnitten befindet, wobei sich ein Wulstabschnitt auf einen Abschnitt innerhalb eines Bereichs in einer Reifenradialrichtung in einem Zustand bezieht, in dem der Reifen auf einer anwendbaren Felge montiert ist, während er mit einem vorgeschriebenen Innendruck gefüllt ist, ohne dass eine Last aufgebracht wird, wobei der Abschnitt von einer Felgengrundlinie bis zu einem äußeren Ende in der Reifenradialrichtung von einem einer Vielzahl von kleinen Wulstkernen reicht.

2. Luftreifen (1) nach Anspruch 1, der ferner einen Laufflächenabschnitt (5) umfasst, wobei
eine Dichtmittelschicht auf der Innenfläche des Reifens im Laufflächenabschnitt angeordnet ist.

## Revendications

1. Bandage pneumatique (1) comprenant :
une paire de tringles (2a) encastrées dans une paire de parties de talon (2), la paire de tringles comprenant chacune une paire de petites tringles (21, 22) divisées dans une direction de la largeur du pneumatique ; et
une carcasse (3) comprenant une ou plusieurs plis de carcasse, la carcasse enjambant de manière toroïdale la paire de tringles avec des parties d'extrémité de la carcasse prises chacune en sandwich entre la paire de petites tringles et en prise avec les petites tringles,
**caractérisé en ce que**
un corps d'insonorisation (7) est disposé sur une surface interne du pneumatique dans la paire de parties de talon, et
dans lequel 100 % du volume du corps d'insonorisation est disposé dans une région dans une direction radiale du pneumatique où la paire de parties de talon sont situées, dans lequel une partie de talon se réfère à une partie dans une région dans une direction radiale du pneumatique dans un état où le pneumatique est monté sur une jante applicable alors qu'il est rempli avec une pression interne prescrite sans charge appliquée, la partie allant d'une ligne de base de jante à une extrémité extérieure dans la direction radiale du pneumatique d'une tringle d'une pluralité de petites tringles.

2. Bandage pneumatique (1) selon la revendication 1, comprenant en outre une partie de bande de roulement (5), dans lequel
une couche de produit d'étanchéité est disposée sur la surface intérieure du pneumatique dans la partie de bande de roulement.
